(19) Europäisches Patentamt
European Patent Office
Office européen des brevets

(11) **EP 3 995 999 A1**

(12) **EUROPEAN PATENT APPLICATION**

(43) Date of publication:
**11.05.2022  Bulletin 2022/19**

(21) Application number: **21185707.3**

(22) Date of filing: **15.07.2021**

(51) International Patent Classification (IPC):
**G06N 3/04** *(2006.01)*     **G06N 3/08** *(2006.01)*

(52) Cooperative Patent Classification (CPC):
**G06N 3/0454; G06N 3/084**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.11.2020  JP 2020185986**

(71) Applicant: **FUJITSU LIMITED**
**Kanagawa 211-8588 (JP)**

(72) Inventors:
• **KAI, Yutaka**
  **Kawasaki-shi, 211-8588 (JP)**
• **KASAGI, Akihiko**
  **Kawasaki-shi, 211-8588 (JP)**
• **HARA, Yasushi**
  **Kawasaki-shi, 211-8588 (JP)**
• **DANJO, Takumi**
  **Kawasaki-shi, 211-8588 (JP)**

(74) Representative: **Haseltine Lake Kempner LLP**
**Cheapside House**
**138 Cheapside**
**London EC2V 6BJ (GB)**

(54) **MACHINE LEARNING PROGRAM, MACHINE LEARNING METHOD, AND INFORMATION PROCESSING APPARATUS**

(57)     A computer-implemented method includes: calculating error gradients with respect to a plurality of layers included in a machine learning model at a time of machine learning of the machine learning model, the plurality of layers including an input layer of the machine learning model; specifying, as a layer to be suppressed, a layer located in a range from a position of the input layer to a predetermined position among the layers in which the error gradient is less than a threshold; and suppressing the machine learning for the layer to be suppressed.

FIG. 15

**Description**

FIELD

The embodiments discussed herein are related to a machine learning program, a machine learning method, and an information processing apparatus.

BACKGROUND

In order to speed up machine learning of a machine learning model, it is effective to use a graphics processing unit (GPU) and it is also effective to distribute processing by using a plurality of GPUs. The speed of machine learning processing has been increased by mounting a plurality of GPUs in a node, which is an information processing apparatus, and executing machine learning processing in parallel within the node. However, it takes no small amount of time to execute Allreduce processing and reflection processing of gradient information between the GPUs.

In the machine learning of the above-mentioned machine learning model, since a new learning portion has to be frequently updated every time the learning is performed, it is desirable to set a relatively high learning rate (LR) for determining the update frequency. On the other hand, in an existing learning portion in which machine learning has already been completed, as the learning portion is closer to the input side, the learning rate is lower and may often become 0 in an utmost case. In the portion where the learning rate is 0, although the machine learning processing does not have to be performed, a number of processing, such as Allreduce processing and reflection processing of gradient information, and weight calculation processing, are performed in vain at the same frequency as that in the new learning portion.

For this reason, in recent years, the Gradient Skip technique has been used in which a layer that does not request machine learning is determined and gradient information ($\Delta w$) calculation, Allreduce processing, and the like are skipped without being performed thereon.

Examples of the related art include as follows: Japanese Laid-open Patent Publication No. 4-232562; International Publication Pamphlet No. WO 2019/167665; U.S. Patent No. 9047566; and U.S. Patent No. 5243688.

SUMMARY

[TECHNICAL PROBLEM]

However, with the above technique, the speed may be increased by skipping the machine learning, but the accuracy of the machine learning may deteriorate depending on the layer to be skipped, the skip timing, or the like, so that the machine learning may end without reaching the target accuracy.

In one aspect, it is an object to provide a computer-readable recording medium storing therein a machine learning program, a machine learning method, and an information processing apparatus that are capable of shortening the processing time of machine learning to reach the target accuracy.

[SOLUTION TO PROBLEM]

According to an aspect of the embodiments, a computer-implemented method includes: calculating error gradients with respect to a plurality of layers included in a machine learning model at a time of machine learning of the machine learning model, the plurality of layers including an input layer of the machine learning model; specifying, as a layer to be suppressed, a layer located in a range from a position of the input layer to a predetermined position among the layers in which the error gradient is less than a threshold; and suppressing the machine learning for the layer to be suppressed.

[ADVANTAGEOUS EFFECTS OF INVENTION]

According to an embodiment, it is possible to shorten the processing time of machine learning to reach the target accuracy.

BRIEF DESCRIPTION OF DRAWINGS

FIG. 1 illustrates a diagram explaining distributed learning of an information processing apparatus according to Embodiment 1;

FIG. 2 illustrates a diagram explaining a reference technique of machine learning;

FIG. 3 illustrates a diagram explaining machine learning of an information processing apparatus according to Embodiment 1;

FIG. 4 illustrates a functional block diagram illustrating a functional configuration of an information processing apparatus according to Embodiment 1;

FIG. 5 illustrates a diagram explaining details of a distributed processing unit;

FIG. 6 illustrates a diagram explaining detection of a skip candidate;

FIG. 7 illustrates a diagram explaining a skip frequency to serve as a determination criterion of learning skipping;

FIG. 8 illustrates a diagram explaining consideration of a warm-up to serve as a determination criterion of learning skipping;

FIGs. 9A and 9B illustrate a diagram explaining selection of a skip layer to serve as a determination criterion of learning skipping;

FIGs. 10A and 10B illustrate a diagram explaining selection of a non-target layer of learning skipping;

FIG. 11 illustrates a diagram explaining division of layers to be skipped in learning skipping;

FIG. 12 illustrates a diagram explaining the order of layers to be skipped in learning skipping;

FIG. 13 illustrates a diagram explaining control of learning skipping;

FIG. 14 illustrates a diagram explaining learning skipping according to Embodiment 1;

FIG. 15 illustrates a flowchart illustrating an example of machine learning processing according to Embodiment 1;

FIG. 16 illustrates a diagram explaining effects;

FIG. 17 illustrates a diagram explaining a method of generating a block for each of element sizes;

FIG. 18 illustrates a diagram explaining constituent units of a block;

FIG. 19 illustrates a diagram explaining another example of control of learning skipping; and

FIG. 20 illustrates a diagram explaining a hardware configuration example.

## DESCRIPTION OF EMBODIMENTS

Hereinafter, embodiments of a computer-readable recording medium storing a machine learning program, a machine learning method, and an information processing apparatus disclosed herein will be described in detail based on the drawings. These embodiments do not limit the present disclosure. The embodiments may be combined with each other as appropriate within the scope without contradiction.

[Embodiment 1]

[Overall Configuration]

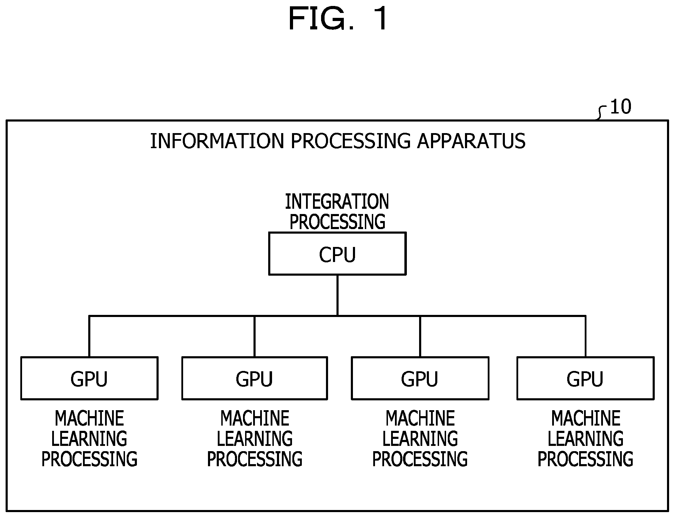

An information processing apparatus 10 according to Embodiment 1 generates a machine learning model by distributed processing using a plurality of GPUs in order to achieve high speed machine learning processing. FIG. 1 is a diagram explaining distributed learning of the information processing apparatus 10 according to Embodiment 1. As illustrated in FIG. 1, the information processing apparatus 10 is an example of a computer including a central processing unit (CPU) and a plurality of GPUs. The CPU executes control operation to supervise the overall information processing apparatus 10, and integrally manages the generation of the machine learning model. Each GPU executes machine learning of the machine learning model in response to an instruction from the CPU. A known method may be employed as the method of the distributed processing.

In recent years, the Gradient Skip technique has been used in which a layer that does not request machine learning is determined by using a learning rate of each layer and learning is suppressed (skipped) without performing gradient information ($\Delta w$) calculation, Allreduce processing, and the like thereon.

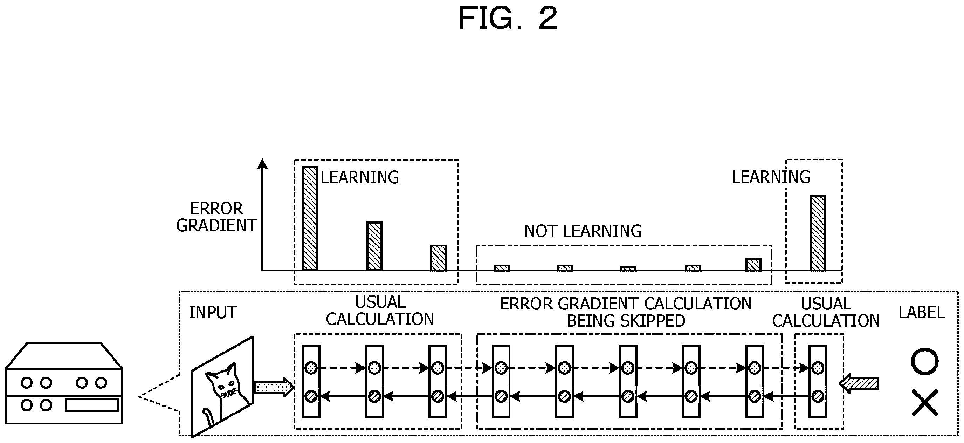

A reference technique of learning skipping will be described below. FIG. 2 is a diagram explaining a reference technique of machine learning. The reference technique illustrated in FIG. 2 is a technique configured to generate a machine learning model by deep learning (DL) or the like, and is also a technique configured to shorten a learning time by acquiring a learning state from an error gradient of DL and skipping calculation of the error gradient.

For example, the reference technique detects a layer in which a learning rate indicating a progress state of learning decreases, and omits the learning for the above layer, thereby shortening the learning time. For example, the learning is executed as usual in the next iteration for each layer in which a difference between an error gradient in the current iteration and an error gradient in the immediately preceding iteration is equal to or larger than a threshold, while the learning is skipped in the next iteration for each layer in which the difference is smaller than the threshold. For example, for the layer in which the learning rate is lowered, subsequent machine learning processing such as the calculation of the error gradient is suppressed.

However, in the reference technique, there is a portion in which the influence of accuracy deterioration when the machine learning is completely skipped is unknown. For example, the accuracy of the machine learning may deteriorate depending on the layer in which the learning is skipped, the skip timing, or the like, whereby the target accuracy may not be reached.

In contrast, the information processing apparatus 10 according to Embodiment 1 determines whether the layer selected as a skip candidate based on the difference between the error gradient in the current iteration and the error gradient in the immediately preceding iteration is a layer truly satisfying the condition that allows the skipping, thereby achieving both the suppression of deterioration in accuracy and the shortening of the learning time.

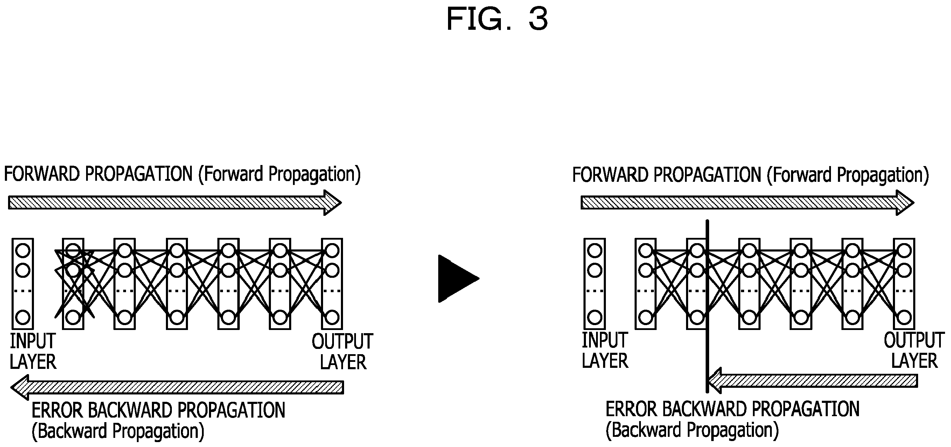

An example of learning skipping used in Embodiment 1 will be described below. FIG. 3 is a diagram explaining machine learning of the information processing apparatus 10 according to Embodiment 1. As illustrated in FIG. 3, in the deep learning of a machine learning model, machine learning (calculation processing) by forward propagation and update processing of weight and the like by error backward propagation are executed. At the time of the update by the error backward propagation, the information processing apparatus 10 stops the update of the weight information from the iteration in which the learning has progressed to some extent, and at this time, the update is stopped from the layer where the update is to be stopped on the input side. This is because when the update on the output side is stopped, there is a case in which the learning accuracy does not reach the target accuracy; however, the input side has a low influence on the accuracy.

In this way, the information processing apparatus 10 is able to reduce not only the error gradient calculation but also the error backward propagation calculation, thereby making it possible to reduce the amount of calculation and also making it possible to shorten the learning time to reach the target accuracy.

[Functional Configuration]

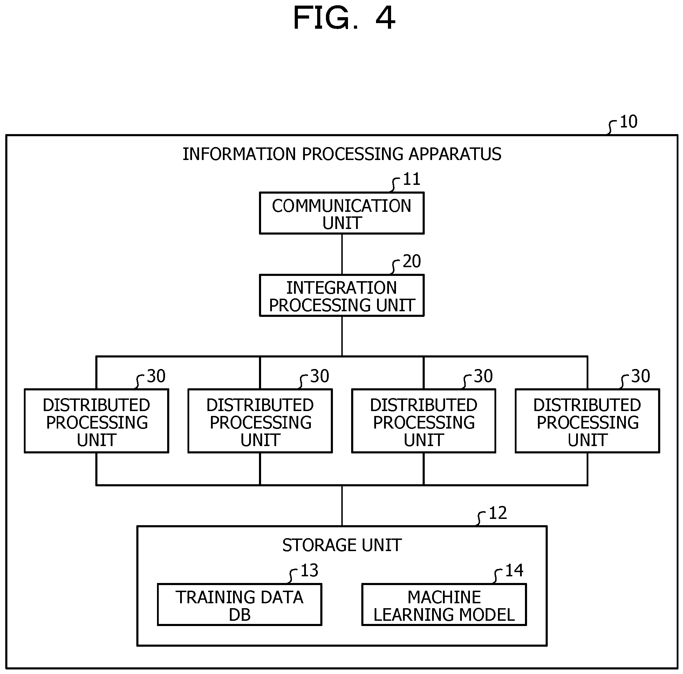

FIG. 4 is a functional block diagram illustrating a functional configuration of the information processing apparatus 10 according to Embodiment 1. As illustrated in FIG. 4, the information processing apparatus 10 includes a communication unit 11, a storage unit 12, an integration processing unit 20, and a plurality of distributed processing units 30.

The communication unit 11 is a processing unit that controls communication with other apparatuses and is achieved by, for example, a communication interface. For example, the communication unit 11 transmits and receives various data, various instructions, and the like to and from an administrator terminal.

The storage unit 12 is a processing unit that stores various types of data, various programs, and the like, and is implemented by, for example, a memory, a hard disk, or the like. The storage unit 12 stores a training data DB 13 and a machine learning model 14.

The training data DB 13 is an example of a data set configured to store training data used for machine learning of the machine learning model 14. For example, each training data stored in the training data DB 13 includes image data and a teacher label. The data set of the training data may be divided into subsets (batch sizes) in optional units.

The machine learning model 14 is a model generated by machine learning such as DL, and is an example of a model using a multilayer neural network constituted by a plurality of layers. For example, when image data is input, the machine learning model 14 performs classification of animals in the image. The machine learning model 14 may employ a deep neural network (DNN), a convolutional neural network (CNN), or the like.

The integration processing unit 20 is a processing unit that supervises the overall information processing apparatus 10, and is implemented by, for example, a CPU. For example, the integration processing unit 20 instructs each of the distributed processing units 30 to execute the distributed processing of machine learning, start or stop the machine learning, and the like, and executes the overall control related to the machine learning.

Each distributed processing unit 30 is a processing unit configured to execute the distributed processing of the machine learning, and is implemented by, for example, a GPU. For example, each distributed processing unit 30 generates the machine learning model 14 by machine learning using each training data stored in the training data DB 13 in response to the instruction from the integration processing unit 20.

[Details of Distributed Processing Unit]

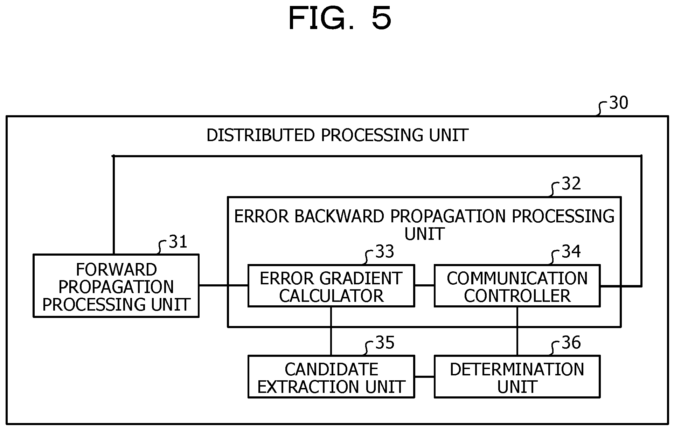

Next, details of each distributed processing unit 30 will be described. Each of the distributed processing units 30 has the same configuration. FIG. 5 is a diagram explaining details of the distributed processing unit 30. As illustrated in FIG. 5, the distributed processing unit 30 includes a forward propagation processing unit 31, an error backward propagation processing unit 32, a candidate extraction unit 35, and a determination unit 36.

The forward propagation processing unit 31 is a processing unit configured to perform forward propagation processing on each layer of the machine learning model 14. For example, the forward propagation processing unit 31 executes so-called forward propagation, and therefore detailed description thereof is omitted. For example, the forward propagation processing unit 31 inputs image data, which is training data, to the front layer (input layer) of the machine learning model 14, and acquires a prediction result (classification result), which is a result of numerical calculations continuously performed from the input layer toward the last layer (output layer) of the machine learning model 14, from the output layer. The forward propagation processing unit 31 calculates an error between the prediction result and the teacher label by using the square error or the like to calculate an error function, and outputs the calculated error function to the error backward propagation processing unit 32.

The error backward propagation processing unit 32 is a processing unit that includes an error gradient calculator 33 and a communication controller 34, calculates an error of each of parameters of the machine learning model 14 by an error backward propagation method using the error function that is input from the forward propagation processing unit 31, and updates the parameters. The error backward propagation processing unit 32 executes so-called backward propagation, for example.

For example, the error backward propagation processing unit 32 calculates an error gradient of a weight of an edge between nodes in the neural network in the order (reverse order) from the output layer toward the input layer of the machine learning model 14. The error gradient corresponds to a value obtained by partially differentiating the error with the weight when the error is regarded as a function of the weight, and represents a change amount of the error when the weight of the error edge is changed by a minute amount. The error backward propagation processing unit 32 updates each parameter such as the weight of each edge so as to reduce the error by using the error gradient.

The error gradient calculator 33 is a processing unit configured to calculate an error gradient indicating a gradient of an error with respect to each parameter of the machine learning model 14, for each of the plurality of layers included in the machine learning model 14. For example, the error gradient calculator 33 calculates an error gradient with respect to each layer included in the machine learning model 14 for each iteration, and outputs error gradient information regarding the error gradient to the candidate extraction unit 35.

In the error gradient calculation, the error gradient calculator 33 suppresses the error gradient calculation for the layer determined as the layer in which the learning is suppressed (learning skipping layer). The error gradient calculator 33 may take only the last layer at the position farthest from the input layer in each of blocks to be described later, as an error gradient calculation target. Various known methods may be employed as the method of calculating the error gradient.

The communication controller 34 is a processing unit configured to perform Allreduce communication between the GPUs. For example, the communication controller 34 transmits and receives the error gradients between the GPUs to thereby sum the error gradients calculated by the plurality of GPUs for each weight of the edge, and aggregates the error gradients between the plurality of GPUs. By using the information regarding the error gradients aggregated as described above, the error backward propagation processing unit 32 updates various parameters of the machine learning model 14.

The communication controller 34 stops the communication of the target layer determined as a skip target by the determination unit 36 to be described later. The communication controller 34 specifies, from among the layers of the machine learning model 14, a layer where the error gradient calculation and the communication (Allreduce) are to be continued without stopping the learning and a layer where the learning is to be stopped, and controls the communication.

The candidate extraction unit 35 is a processing unit configured to extract, by using the error information calculated by the error gradient calculator 33, a layer to be a candidate for a skip target in which the learning is stopped. For example, the candidate extraction unit 35 extracts, as a skip candidate, a layer in which the displacement of the error gradient between iterations is small among the layers.

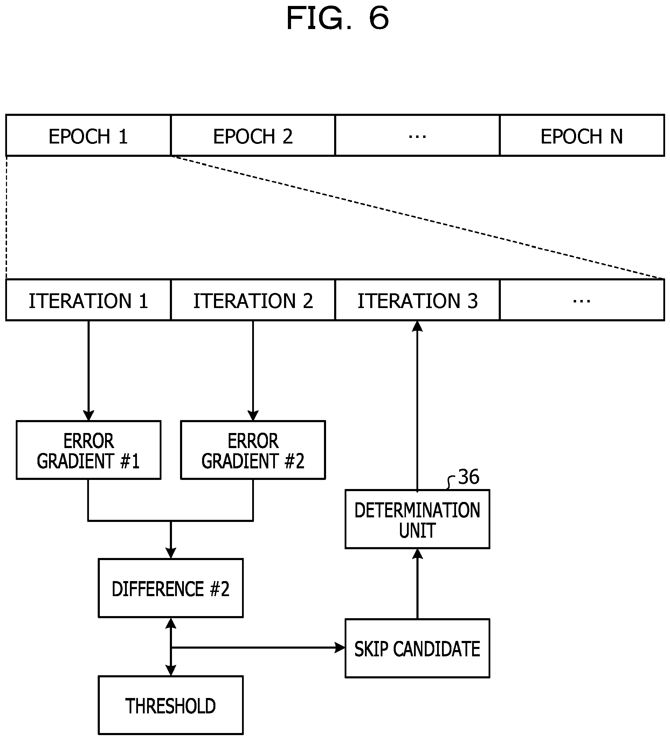

FIG. 6 is a diagram explaining detection of a skip candidate. Although FIG. 6 describes a certain layer, processing that is illustrated in FIG. 6 is executed for each of the layers. As illustrated in FIG. 6, the candidate extraction unit 35 extracts a skip candidate every time iteration in each of epochs is completed.

For example, the candidate extraction unit 35 calculates and holds an error gradient #1 at the timing when iteration 1 of epoch 1 ends. Thereafter, when iteration 2 of epoch 1 ends, the candidate extraction unit 35 calculates and holds an error gradient #2, calculates a difference #2, which is a difference between the error gradients #1 and #2 (for example, a difference in absolute value), and compares the difference #2 with a threshold.

When the difference #2 is smaller than the threshold, the candidate extraction unit 35 determines that the learning of the current layer has sufficiently progressed and notifies the determination unit 36 of information specifying the current layer as a skip candidate. On the other hand, when the difference #2 is equal to or larger than the threshold, the candidate extraction unit 35 determines that the learning of the current layer is insufficient, does not consider the current layer as a skip candidate, and maintains normal learning. The candidate extraction unit 35 may perform the above skip candidate determination only on the last layer of each block.

The determination unit 36 is a processing unit that determines whether to cause the skip candidate layer extracted by the candidate extraction unit 35 to experience learning skipping or normal learning. For example, the determination unit 36 determines whether a predetermined determination condition is satisfied, determines the skip candidate layer satisfying the determination condition as a skip target, and notifies the communication controller 34 of the determination result. On the other hand, the determination unit 36 maintains the normal learning for the skip candidate layer that does not satisfy the determination condition, by suppressing the notification to the communication controller 34.

One or a plurality of determination criteria may be set as the determination condition used by the determination unit 36. Hereinafter, the determination criteria and the reliability of the determination criteria using experimental data and the like will be described.

(Determination Criterion: Skip Frequency)

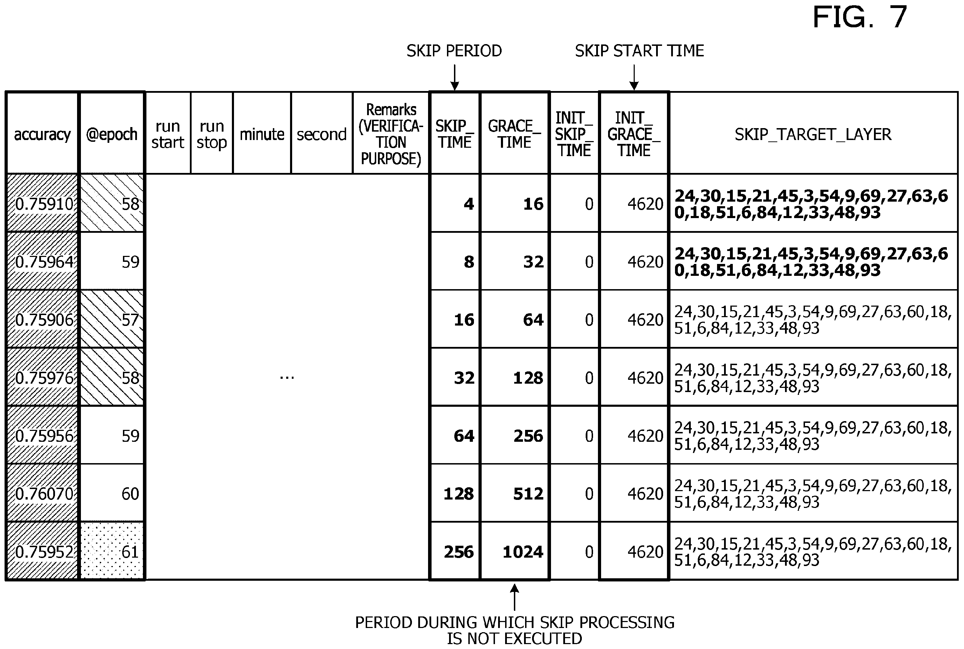

First, the frequency of skipping machine learning will be examined. FIG. 7 is a diagram explaining a skip frequency to serve as a determination criterion of learning skipping. FIG. 7 illustrates experimental data when a skip frequency is changed, where indicated are accuracy, the number of epochs (@epoch) when the target accuracy is achieved, a skip period (SKIP_TIME), a period during which the skip processing is not executed (GRACE_TIME), a skip start time (INIT_GRACE_TIME), and a skipped-layer number (SKIP_TARGET_LAYER). In each of the experiments illustrated in FIG. 7, the skip frequency "SKIP_TIME/(GRACE_TIME + SKIP_TIME)" is the same and is about 25%.

As indicated in FIG. 7, since the number of epochs decreases toward the upper side of the table, it is understood that the learning is finished earlier while maintaining the accuracy, by shortening the period during which the skip processing is not executed (GRACE_TIME) and performing the skipping frequently. For example, it may be concluded that the accuracy is less affected when the skipping is performed very often even in the case where the skip frequency is the same with respect to the layer.

(Determination Criterion: Warm-up)

Next, warm-up processing (hereinafter, may be described as "warm-up") will be examined. Generally, in machine learning, when the machine learning is started, a warm-up is executed in an initial stage of the machine learning. In the following, experimental data in a case where skipping is started during a warm-up and in a case where skipping is started after the warm-up is finished will be examined.

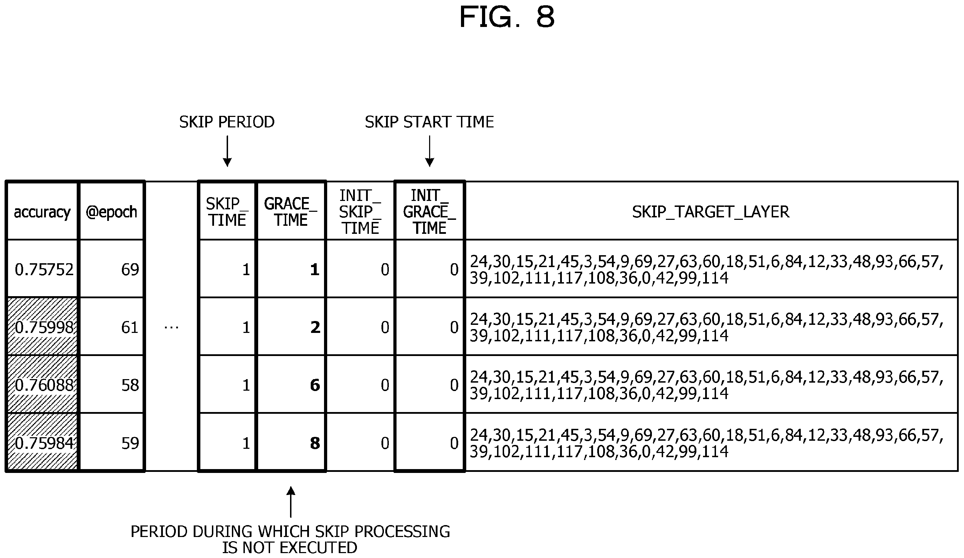

FIG. 8 is a diagram explaining consideration of a warm-up to serve as a determination criterion of learning skipping. FIG. 8 illustrates experimental data in the case where a warm-up of a learning rate (LR) is performed up to five epochs, and each of the items illustrated in FIG. 8 are the same as those in FIG. 7. The upper two pieces of experimental data illustrated in FIG. 8 is the data when learning skipping is started during a warm-up because the period during which the skip processing is not executed (GRACE_TIME) is equal to or shorter than five; the lower two pieces of experimental data in FIG. 8 is the data when learning skipping is started after the warm-up is finished because the period during which the skip processing is not executed (GRACE_TIME) is longer than five.

As illustrated in FIG. 8, when the learning skipping is executed during the warm-up, convergence of accuracy is delayed, and the learning skipping during the warm-up has an adverse effect on the accuracy more than the skipped length. It may be concluded that it is better to start the learning skipping after the warm-up is finished, for example.

(Determination Criterion: Selection of Skip Layer)

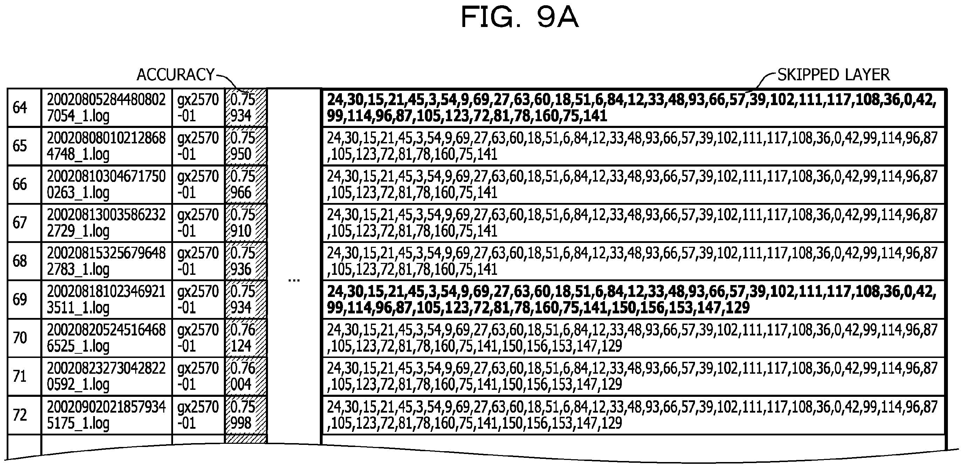

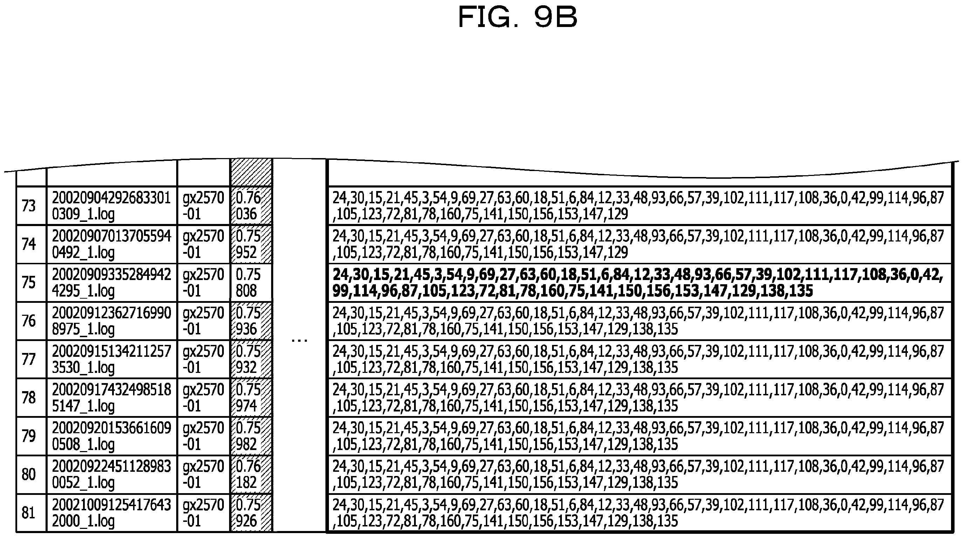

Next, selection of a layer in which machine learning is skipped will be examined. FIG. 9 is a diagram explaining selection of a skip layer to serve as a determination criterion of learning skipping. FIG. 9 (i.e., FIGs. 9A and 9B) illustrates experimental data for a total of 55 layers of convolution layers having weights, where a relationship between the skipped layers and the final accuracy is illustrated. As illustrated in FIG. 9, when the number of selected layers to be skipped increases, the learning convergence tendency is worsened, and when the layers near an FC layer are skipped, the learning accuracy is lowered. The skip frequency has a larger influence on the convergence of learning than the number of selected layers to be skipped, and a learning effect of a batch normalization (BN) layer is large. It may be concluded that the learning converges even when a large number of layers are skipped, for example.

(Determination Criterion: Selection of Non-target Layer)

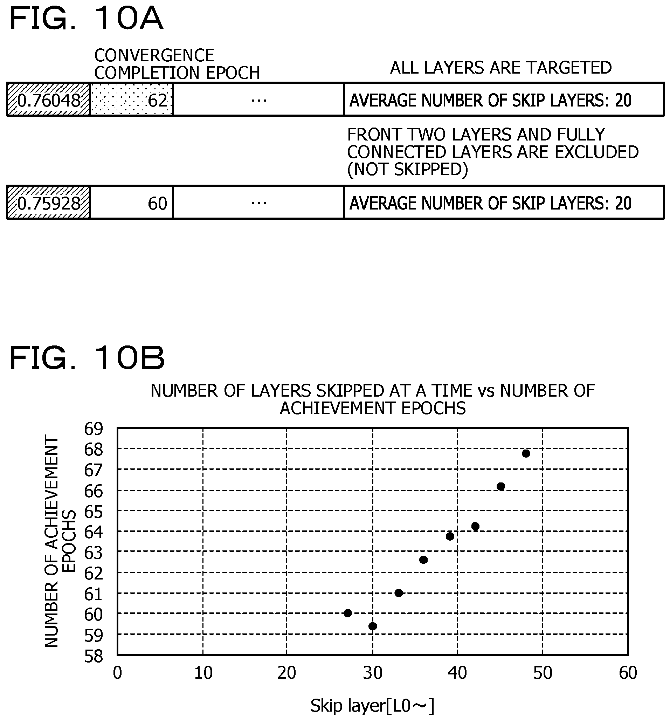

Next, a layer in which machine learning is not skipped will be examined. FIG. 10 (i.e., FIG. 10A and 10B) is a diagram explaining selection of a non-target layer of learning skipping. In FIG. 10A, there are illustrated experimental data when all layers are taken as skip targets and experimental data when the front two layers including an input layer, and fully connected layers are excluded from the skip targets. It is possible to reduce the number of epochs until the target accuracy is reached by excluding the front two layers and the fully connected layers from the skip targets, in comparison with the case where all the layers are taken as the skip targets. For example, it may be concluded that it is better to exclude the layers near the input and the fully connected layers (last two layer) in order to bring a favorable effect for the accuracy. It is considered that the layers near the input have a smaller influence on the accuracy than the above last layers.

In FIG. 10B, there is illustrated a relationship between the number of layers to be skipped at a time and the number of achievement epochs for reaching the target accuracy. It is understood from the drawing that the number of achievement epochs is approximately 68 when the layers of approximately 50 in number are skipped at a time, and the number of achievement epochs is approximately 59 when the layers of approximately 30 in number are skipped at a time. For example, it may be concluded that the smaller the number of skipped layers (the smaller a block unit), the better the influence on the accuracy is, and the faster the speed for achieving the target is.

(Determination Criterion: Division of Skip Layers)

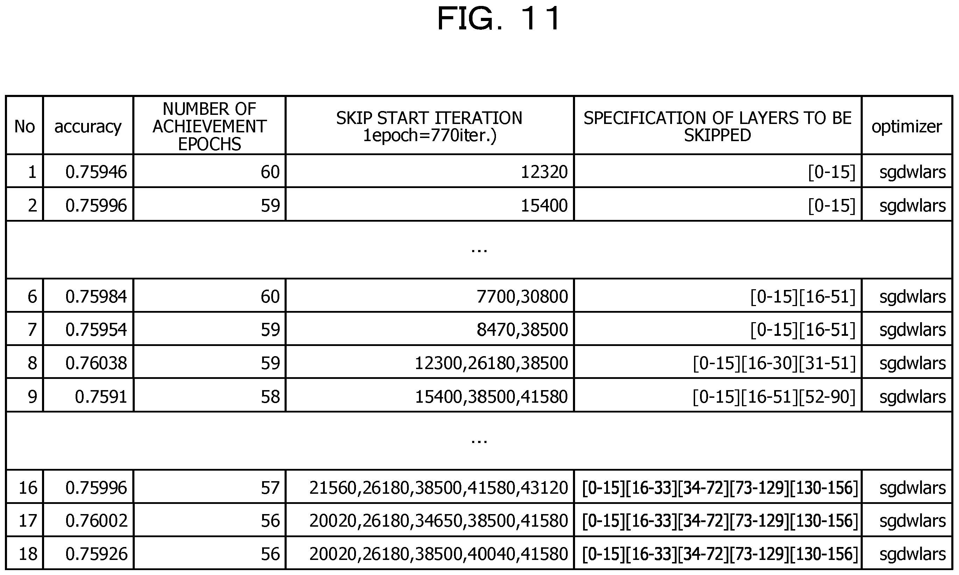

Next, how to divide layers to be skipped among a plurality of layers included in the machine learning model 14 will be examined. FIG. 11 is a diagram explaining division of layers to be skipped in learning skipping. FIG. 11 illustrates a relationship among accuracy, the number of achievement epochs, a skip start iteration, and specification of layers to be skipped. As illustrated in FIG. 11, in the case where the layers to be skipped are included in one block of [0-15], the number of achievement epochs having reached the target accuracy is "60". Meanwhile, when the layers to be skipped are included in five blocks of [0-15], [16-33], [34-72], [73-129], and [130-156], the number of achievement epochs having reached the target accuracy is "56". For example, it may be concluded that the target accuracy is likely to be reached earlier when the timing is set in a more finely divided manner as for the layers to be skipped.

(Determination Criterion: Order of Layers to be Skipped)

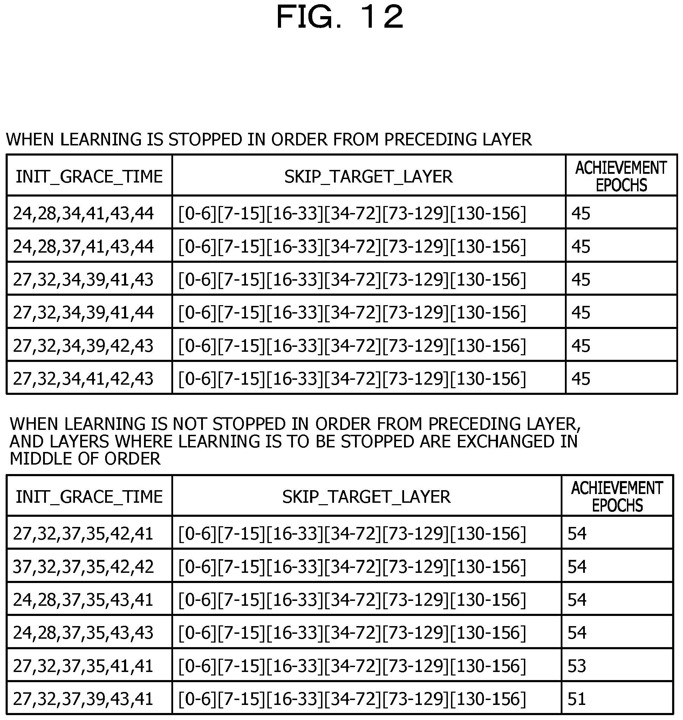

Finally, the order of efficient skipping of the layers from the front input layer to the last output layer will be examined. FIG. 12 is a diagram explaining the order of layers to be skipped in the learning skipping. FIG. 12 illustrates a case in which learning is stopped in order from a preceding layer near the input layer, and a case in which learning is not stopped in order from the preceding layer, and the layers where the learning is to be stopped are exchanged in the middle of the order.

For example, the example of the first row in the case where the learning is stopped in order from the preceding layer is an example in which the skipping is made in the order of 24, 28, 41, 43, and 44th layers. The example of the first row in the case where the learning is stopped in which the layers to be skipped are exchanged in the order is an example in which the skipping is made in the order of 24, 32, 37, 35, and 41st layers, where the 37th layer is skipped earlier than the 35th layer.

As illustrated in FIG. 12, it is apparent that the number of achievement epochs is larger and the learning time is longer when the order of the layers to be skipped is changed. For example, it may be concluded that it is better to skip the layers in order from the preceding layer.

(Determination of Skip Candidate)

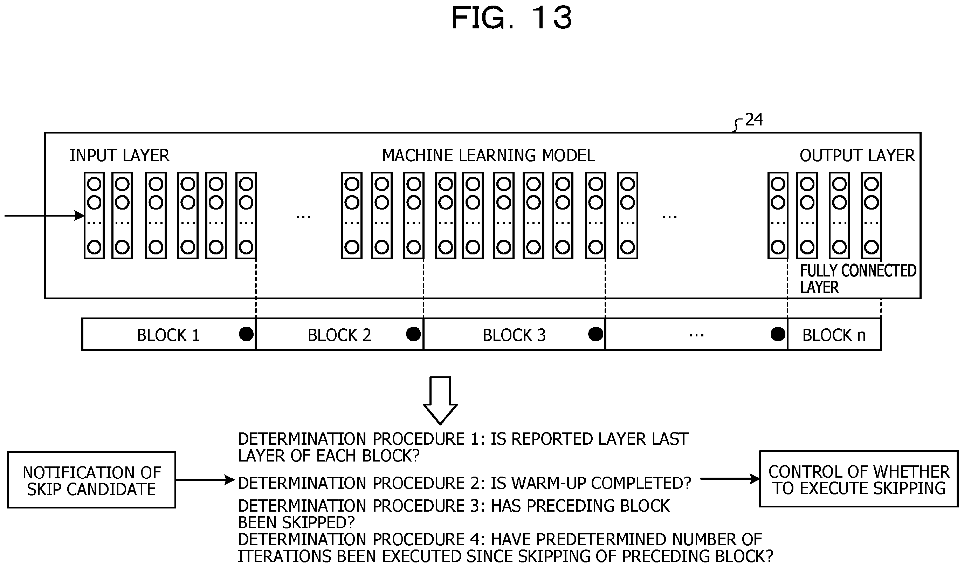

The determination unit 36 determines whether to skip a skip candidate in accordance with a determination condition in consideration of the determination criteria described above. FIG. 13 is a diagram explaining control of learning skipping. As illustrated in FIG. 13, among the layers included in the machine learning model 14, the determination unit 36 divides a plurality of layers excluding an output layer, fully connected layers, and two layers preceding the fully connected layers into n blocks. For example, the determination unit 36 generates a block 1 (from 0 layer to s_1 layer), a block 2 (from s_1+1 layer to s_2 layer), a block 3 (from s_2+1 layer to s_3 layer), ..., and a block n (from s_n-1 layer to s_n layer).

In this state, when the determination unit 36 is notified of a skip candidate layer (for example, a layer number), the determination unit 36 determines whether the above layer is a skip target in accordance with determination procedures 1 to 4. For example, the determination unit 36 determines whether the reported layer number corresponds to the last layer of each block (determination procedure 1), whether the warm-up is completed (determination procedure 2), whether a block preceding the block to which the reported layer belongs has already been skipped (determination procedure 3), and whether a predetermined number of iterations have been executed since the skipping of the preceding block (determination procedure 4).

The block division is a matter to be determined based on the consideration of the selection of the non-target layer described with reference to FIG. 10 and the consideration of the division of the skip layers described with reference to FIG. 11. The determination procedure 1 is a criterion determined based on the consideration of the division of the skip layers described with reference to FIG. 11. The determination procedure 2 is a criterion determined based on the consideration of the warm-up described with reference to FIG. 8. The determination procedure 3 is a criterion determined based on the consideration of the order of the layers to be skipped described with reference to FIG. 12. The determination procedure 4 is a criterion determined based on the consideration of the skip frequency described with reference to FIG. 7. The determination procedures are carried out in any order.

In a case where a skip candidate layer satisfies the determination procedures 1 to 4, the determination unit 36 determines to execute skipping and notifies the communication controller 34 of the determination result. Thereafter, in the next iteration, machine learning (error gradient calculation, parameter update, and the like) for the above-discussed layer is skipped.

In this manner, in the case where the last layer of the block is detected as a skip candidate, the determination unit 36 executes the final determination of skipping under the condition that a block preceding the block to which the skip candidate layer belongs has already been skipped, the warm-up has been completed, and a predetermined number of iterations have been completed since the skipping of the preceding block.

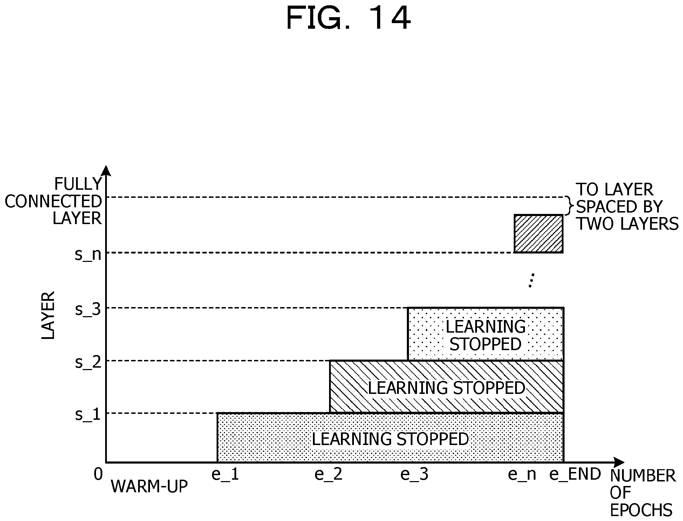

Accordingly, the determination unit 36 is able to execute learning skipping at a predetermined interval in order from the front block. Next, a control image of learning skipping by the determination unit 36 will be described. FIG. 14 is a diagram explaining learning skipping according to Embodiment 1.

As illustrated in FIG. 14, the determination unit 36 divides layers, from the input layer to the layer spaced from the fully connected layer by two layers, into a plurality of blocks, and stops the machine learning of the layers from "0 layer to s_1 layer" included in the block 1 at a timing when the number of epochs is "e_1" after the end of the warm-up. Next, the determination unit 36 stops the machine learning of the layers from "s_1+1 layer" to "s_2 layer" included in the block 2 at a timing when the number of epochs is "e_2", and stops the machine learning of the layers from "s_2+1 layer" to "s_3 layer" included in the block 3 at a timing when the number of epochs is "e_3". In this way, since the determination unit 36 is able to skip the learning of each block stepwise in order from the front block, the machine learning time to achieve the target accuracy may be shortened.

For example, the determination unit 36 may reduce the total skip amount represented in Expression (1), in the relations of "the number of epochs "e_1" for stopping the machine learning of the block 1 > the number of epochs "e_END" for completely finishing the learning", and "s_n" < the fully connected layer". For example, the amount of skipping equivalent to areas of the respective learning stop frames depicted in FIG. 14 may be reduced.

$$\text{Total Skip Amount} = s1 \times (e\_END - e\_1) + s2 \times (e\_END - e\_2) \cdots$$
$$+ s\_n \times (e\_END - e\_n) = \sum_{k=1}^{n} s\_k \times (e\_{END} - e\_k) \qquad \cdots (1)$$

[Example of Processing]

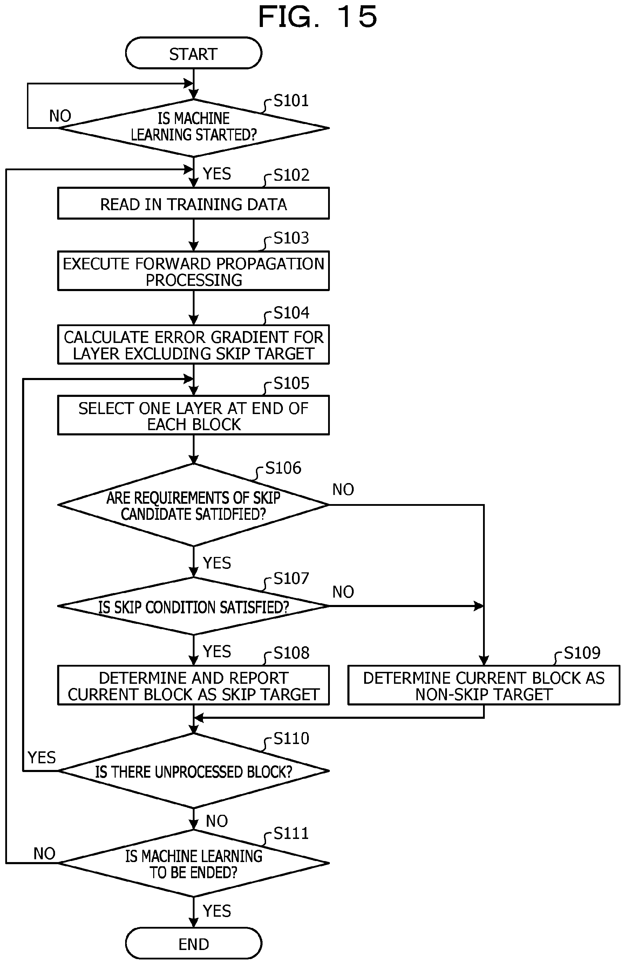

FIG. 15 is a flowchart illustrating an example of machine learning processing according to Embodiment 1. As illustrated in FIG. 15, when the machine learning is started (S101: Yes), the forward propagation processing unit 31 reads in training data (S102) and executes forward propagation processing (S103).

Subsequently, the error backward propagation processing unit 32 calculates an error gradient for each layer excluding a skip target (S104). Then, the candidate extraction unit 35 selects one layer at the end of each block (S105), and determines whether the selected layer satisfies requirements of a skip candidate (S106).

In a case where the layer satisfies the requirements of the skip candidate (S106: Yes), the determination unit 36 determines whether the block to which the skip candidate layer belongs satisfies a skip condition (S107); in a case where the skip condition is satisfied (S107: Yes), the determination unit 36 determines the block as a block to be skipped and notifies the communication controller 34 of the block (S108). Thus, the communication controller 34 makes the block known as a skip target, and in the next iteration, machine learning for each layer belonging to the block is skipped.

On the other hand, when the block of the skip candidate does not satisfy the skip condition (S107: No), the determination unit 36 determines the block as a non-skip target, and causes normal machine learning to be executed (S109). When the block does not satisfy the requirements of the skip candidate in S106 (S106: No), the normal machine learning is executed (S109).

Thereafter, in a case where there is an unprocessed block (S110: Yes), the candidate extraction unit 35 repeats the processing in S105 and the subsequent processing; in a case where no unprocessed layer is present (S110: No), the forward propagation processing unit 31 determines whether to end the machine learning (S111). For example, the forward propagation processing unit 31 determines whether an optional termination criterion is reached, such as whether the accuracy has reached the target accuracy or whether a specified number of epochs has been executed.

In a case where the machine learning is to be continued (S111: No), the forward propagation processing unit 31 repeats the processing in S102 and the subsequent processing; in a case where the machine learning is to be ended (S111: Yes), the machine learning is ended, and a learning result and the like are displayed.

[Effects]

As described above, in each block in the machine learning model 14, the information processing apparatus 10 may suppress the weight update processing, the error backward propagation processing, and the like of the layer for which machine learning has been finished, and may obtain significant reductions in unnecessary calculation and update processing. As a result, the information processing apparatus 10 may achieve an increase in the speed of the overall calculation model while suppressing deterioration in the accuracy.

In a case where an information processing apparatus (node) mounting a plurality of GPUs is used, parallel processing configured with a plurality of nodes is performed, or the like, the proportion of resources consumed for inter-GPU communication, inter-node communication, aggregation processing, and reflection processing increases. However, with the information processing apparatus 10 described above, the effect of increasing the speed by reducing the undesired calculation and update processing is further enhanced.

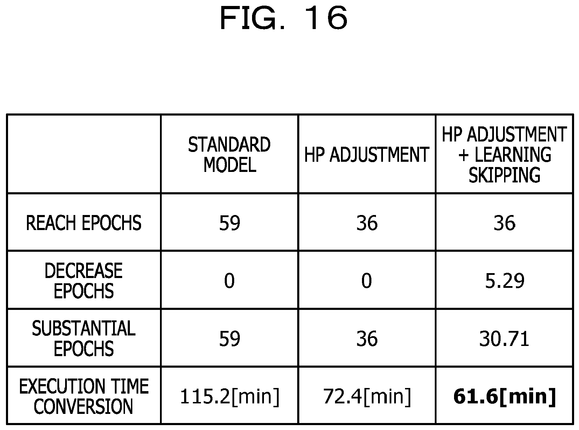

FIG. 16 is a diagram explaining the effects. FIG. 16 illustrates a result of comparison among a commonly used standard model, a hyperparameter (HP) adjustment model in which only a hyperparameter was adjusted, and the machine learning model 14 in which a hyperparameter adjustment and learning skipping were executed by the method according to Embodiment 1. As illustrated in FIG. 16, reach epochs "36", at which the target accuracy was reached, were the same in the HP adjustment model and the machine learning model 14 of Embodiment 1, but approximately five epochs were managed to be decreased in the machine learning model 14 of Embodiment 1, so that the reach epochs were substantially "about 30". Accordingly, by executing the method according to Embodiment 1, the execution time was managed to be shortened to 61.6 min, and a significant reduction in time was achieved.

[Embodiment 2]

The determination condition of the skip target is not limited to that described in Embodiment 1. Then, a method for achieving high speed, another determination condition of the skip target, and the like will be described below.

[Blocking]

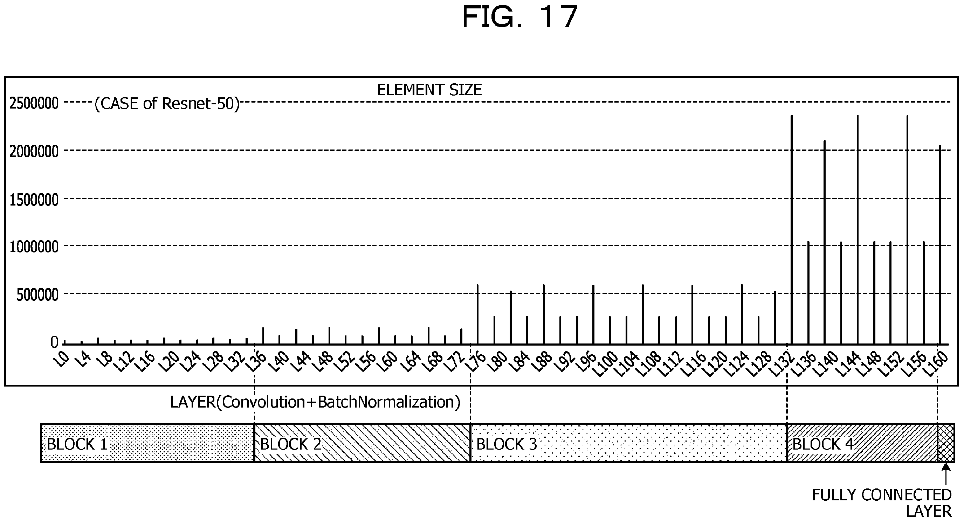

For example, efficient learning skipping may be achieved by making a block for each of element sizes of layers. FIG. 17 is a diagram explaining a method of generating a block for each of the element sizes. As illustrated in FIG. 17, the determination unit 36 recognizes the element size of each layer of the target model of the machine learning in advance, and generates blocks in skipping units for each of the element sizes. For example, when Resnet 50 is employed as the machine learning model 14, there are 50 layers of convolution layers alone, there are 161 layers when Batch-Normalization layers and fully connected layers are included, and the layers may be roughly divided into five blocks for each of the element sizes. In a case where the fully connected layer and the layer preceding the fully connected layer are skipped, the accuracy degrades significantly, and therefore the last block is excluded from skipping.

By generating the blocks as described above, it is possible to manage the layers predicted to have the same learning progress as the same block and control the learning skipping. Thus, when skipping a certain block, it is possible to lower the probability that a layer in a learning state is present in the block. As a result, it is possible to achieve efficient learning skipping and further increase the speed.

[Block Configuration]

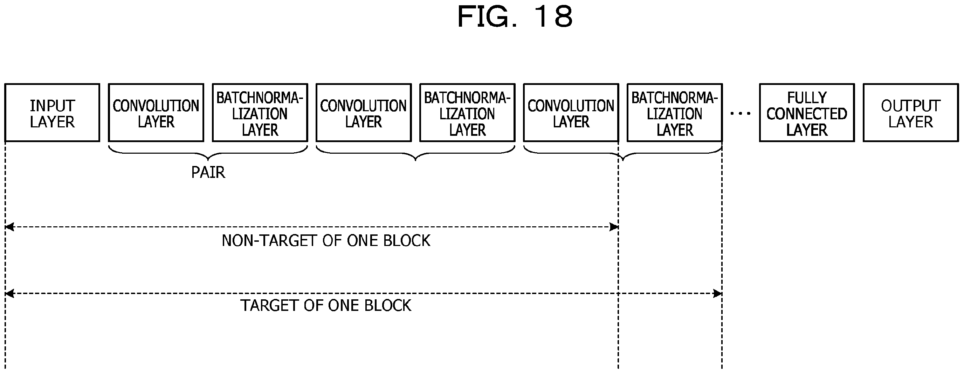

For example, the convolution layer and the BatchNormalization layer are formed alternately in many cases, and efficient machine learning may be executed when these layers are disposed as a pair in the same block so as not to extend over different blocks. FIG. 18 is a diagram explaining constituent units of a block. As illustrated in FIG. 18, when an input layer, a convolution layer, a BatchNormalization layer, a convolution layer, a BatchNormalization layer, a convolution layer, a BatchNormalization layer, a convolution layer, a BatchNormalization layer, and the like are constituted in that order, a block is generated while setting the "convolution layer and BatchNormalization layer" as a pair.

For example, the "input layer, convolution layer, BatchNormalization layer, convolution layer, BatchNormalization layer, convolution layer, BatchNormalization layer, convolution layer, BatchNormalization layer, and the like" are not set as a block of the "input layer, convolution layer, BatchNormalization layer, convolution layer, BatchNormalization layer, and convolution layer", but are set as a block of the "input layer, convolution layer, BatchNormalization layer, convolution layer, BatchNormalization layer, convolution layer, and BatchNormalization layer".

By generating the block as discussed above, layers in a range having the same influence on machine learning may be disposed as a pair in the same block, whereby efficient learning skipping may be achieved without obstructing efficient machine learning.

[Skip Control]

For example, as described with reference to FIG. 7 and the like, even in a case where the skip frequency is the same, since higher accuracy is obtained by finely performing the skipping, it is possible to improve the accuracy by skipping the machine learning stepwise also in the block.

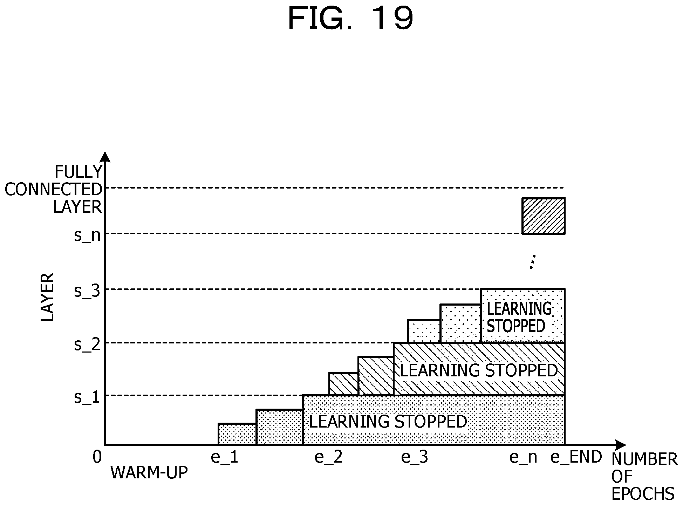

FIG. 19 is a diagram explaining another example of control of learning skipping. As illustrated in FIG. 19, for example, in a case where an average value of error gradients in respective layers in a block including [from 0 layer to s_1 layer] is less than a threshold, the determination unit 36 determines learning skipping of the block. At this time, the determination unit 36 causes the layers from the front layer to a first layer in the block to be skipped, and causes the other layers to execute machine learning as usual.

Thereafter, in a case where an average value of error gradients in respective layers of [from the first layer to s_1 layer] of the block is less than a threshold, the determination unit 36 determines learning skipping of the block. At this time, the determination unit 36 causes the layers from the first layer to the second layer in the block to be skipped, and causes the other layers to execute machine learning as usual.

As described above, the determination unit 36 may improve the accuracy while shortening the overall learning time by making the machine learning skipped stepwise in the block. The determination unit 36 may divide the inside of a block into a plurality of child blocks, and may skip learning for each child block stepwise at a predetermined iteration interval with respect to a block in which the average value of the error gradients once becomes less than the threshold.

[Embodiment 3]

While the embodiments of the present disclosure have been described, the present disclosure may be implemented in various different forms other than the above-described embodiments.

[Numerical Values and the like]

The number of blocks, the number of layers, the various thresholds, the numerical values, the number of GPUs, and the like used in the above-described embodiments are merely examples, and may be optionally changed. The determination criteria described with reference to FIGs. 7 to 14 and the like may be used as determination conditions by combining any criteria. The determination of learning skipping is not limited to being made for each iteration, and may be made for each epoch.

[Block Control and the like]

For example, in the above examples, it is described that the error gradient is calculated for the last layer among the layers belonging to the block and whether the last layer corresponds to a skip candidate is determined. However, the present disclosure is not limited thereto. For example, each of the blocks may be determined as a skip target depending on whether the average value of error gradients in a layer belonging to the block is less than a threshold.

In the above-described embodiments, the example in which the skipping is controlled in units of blocks is described. However, the present disclosure is not limited thereto, and the skipping may be controlled in units of layers. For example, when the information processing apparatus 10 detects a plurality of layers in which a difference between the error gradients is smaller than a threshold, the information processing apparatus 10 may determine a predetermined number of layers as skip targets in order from the layer closest to the input layer.

[System]

Unless otherwise specified, processing procedures, control procedures, specific names, and information including various kinds of data and parameters described in the above-described document or drawings may be optionally changed.

Each element of each illustrated apparatus is of a functional concept, and may not be physically constituted as illustrated in the drawings. For example, the specific form of the distribution or integration of the apparatuses is not limited to the apparatuses illustrated in the drawings. For example, the entirety or part of the apparatus may be constituted so as to be functionally or physically distributed or integrated in any units in accordance with various kinds of loads, usage states, or the like.

All or any part of the processing functions performed by each apparatus may be achieved by a CPU and a program analyzed and executed by the CPU or may be achieved by a hardware apparatus using wired logic.

[Hardware]

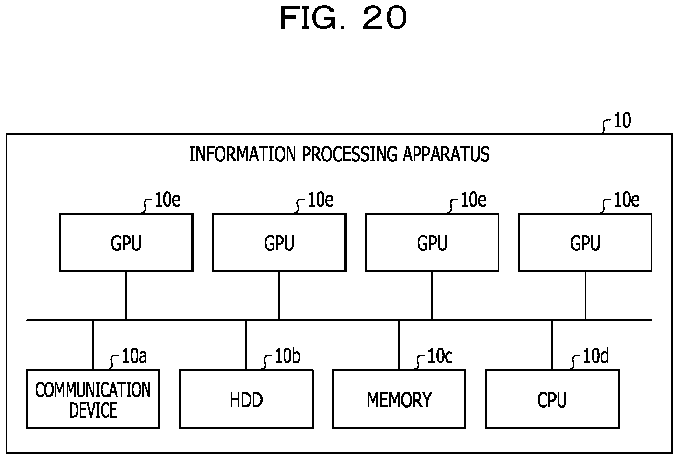

Next, a hardware configuration example of the information processing apparatus 10 described in the above embodiments will be described. FIG. 20 is a diagram explaining the hardware configuration example. As illustrated in FIG. 20, the information processing apparatus 10 includes a communication device 10a, a hard disk drive (HDD) 10b, a memory 10c, a CPU 10d, and a plurality of GPUs 10e. Constituent elements illustrated in FIG. 20 are coupled to one another by a bus or the like.

The communication device 10a is a network interface card or the like and communicates with another server. The HDD 10b stores a program, a DB, and the like for enabling the functions illustrated in FIG. 4, FIG. 5, and the like.

The CPU 10d is configured to control the overall information processing apparatus 10, and, for example, reads out a program related to machine learning from the HDD 10b or the like and loads it on the memory 10c, so that each of the GPUs 10e configured to operate each processing of the machine learning reads out, from the HDD 10b or the like, a program that executes the same processing as that of each processing unit illustrated in FIG. 5 and the like and loads the read program on the memory 10c, whereby processing that executes each of the functions described with reference to FIG. 3 and the like is operated. For example, each GPU 10e reads out, from the HDD 10b or the like, a program having the same functions as those of the forward propagation processing unit 31, the error backward propagation processing unit 32, the candidate extraction unit 35, the determination unit 36, and the like. Then, each GPU 10e executes processing that executes the same processing as that of the forward propagation processing unit 31, the error backward propagation processing unit 32, the candidate extraction unit 35, the determination unit 36, and the like.

As described above, the information processing apparatus 10 operates as an information processing apparatus that executes various information processing methods by reading out and executing programs. The information processing apparatus 10 may also achieve the functions similar to the functions of the above-described embodiments by reading out the above-described programs from a recording medium with a medium reading device and executing the above-described read programs. The programs described for another embodiment are not limited to the programs to be executed by the information processing apparatus 10. For example, the present disclosure may be similarly applied to when another computer or server executes the programs or when another computer and server execute the programs in cooperation with each other.

The program may be distributed via a network such as the Internet. The program may be executed by being recorded on a computer-readable recording medium such as a hard disk, a flexible disk (FD), a compact disc read-only memory (CD-ROM), a magneto-optical disk (MO), or a Digital Versatile Disc (DVD) and being read out from the recording medium by a computer.

**Claims**

1. A machine learning program for causing a computer to execute a process, the process comprising:

    calculating error gradients with respect to a plurality of layers included in a machine learning model at a time of machine learning of the machine learning model, the plurality of layers including an input layer of the machine learning model;
    specifying, as a layer to be suppressed, a layer located in a range from a position of the input layer to a predetermined position among the layers in which the error gradient is less than a threshold; and
    suppressing the machine learning for the layer to be suppressed.

2. The machine learning program according to claim 1, the process further comprising:

    dividing the plurality of layers into a plurality of blocks in order from the input layer,
    wherein the calculating error gradients calculates, for each of the plurality of blocks, an average value of the error gradients in each layer belonging to each of the blocks, and
    there is included suppressing the machine learning for each layer belonging to a block near the input layer among the blocks in which the average value of the error gradients is less than a threshold.

3. The machine learning program according to claim 1, the process further comprising:

    dividing the plurality of layers into a plurality of blocks in order from the input layer,
    wherein the calculating error gradients calculates, for each of the plurality of blocks, the error gradient with respect to a layer at a position farthest from the input layer among the layers belonging to the blocks, and
    there is included suppressing the machine learning for each layer belonging to a block near the input layer among the blocks in which the error gradient is less than a threshold.

4. The machine learning program according to claim 2 or 3,
   wherein the dividing the plurality of layers specifies an element size of each of the plurality of layers, and
   there is included dividing the plurality of layers into the plurality of blocks in such a manner that each layer with the element size falling within a predetermined range constitutes one block.

5. The machine learning program according to any one of claims 2 to 4,
   wherein the dividing the plurality of layers includes dividing the plurality of layers into the plurality of blocks in such a manner that a convolution layer and a batch normalization layer alternately disposed in the plurality of layers are set as a pair, and the pair does not extend over different blocks.

6. The machine learning program according to any one of claims 2 to 5,
   wherein the dividing the plurality of layers divides into the plurality of blocks, the layers excluding an output layer, a fully connected layer, and two layers located in front of the fully connected layer among the plurality of layers included in the machine learning model.

7. The machine learning program according to any one of claims 2 to 6,
   wherein the suppressing the machine learning divides the block to be suppressed into a plurality of child blocks, and there is included suppressing the machine learning of the plurality of child blocks stepwise at a predetermined iteration interval.

8. The machine learning program according to any one of claims 1 to 7,
   wherein the suppressing the machine learning includes suppressing the machine learning in which the machine learning for the layer to be suppressed is continued until warm-up processing executed in an initial stage of the machine learning is completed, and the machine learning for the layer to be suppressed is suppressed after the completion of the warm-up processing.

9. A computer-implemented method comprising:

   calculating error gradients with respect to a plurality of layers included in a machine learning model at a time of machine learning of the machine learning model, the plurality of layers including an input layer of the machine learning model;
   specifying, as a layer to be suppressed, a layer located in a range from a position of the input layer to a predetermined position among the layers in which the error gradient is less than a threshold; and
   suppressing the machine learning for the layer to be suppressed.

10. An information processing apparatus comprising:

   a calculation unit configured to calculate error gradients with respect to a plurality of layers included in a machine learning model at a time of machine learning of the machine learning model, the plurality of layers including an input layer of the machine learning model;
   a specifying unit configured to specify a layer located in a range from a position of the input layer to a predetermined position as a layer to be suppressed among the layers in which the error gradient is less than a threshold; and
   a suppression unit configured to suppress the machine learning for the layer to be suppressed.

# FIG. 1

INFORMATION PROCESSING APPARATUS

INTEGRATION
PROCESSING

CPU

GPU

MACHINE
LEARNING
PROCESSING

GPU

MACHINE
LEARNING
PROCESSING

GPU

MACHINE
LEARNING
PROCESSING

GPU

MACHINE
LEARNING
PROCESSING

# FIG. 2

EP 3 995 999 A1

# FIG. 3

EP 3 995 999 A1

FORWARD PROPAGATION (Forward Propagation)

INPUT
LAYER

OUTPUT
LAYER

ERROR BACKWARD PROPAGATION
(Backward Propagation)

FORWARD PROPAGATION (Forward Propagation)

INPUT
LAYER

OUTPUT
LAYER

ERROR BACKWARD PROPAGATION
(Backward Propagation)

# FIG. 4

```
                                                              ┌─10
┌───────────────────────────────────────────────────────────────────┐
│              INFORMATION PROCESSING APPARATUS                       │
│                                              ┌─11                    │
│                        ┌──────────────────────┐                     │
│                        │    COMMUNICATION      │                     │
│                        │       UNIT            │                     │
│                        └──────────────────────┘                     │
│                                              ┌─20                    │
│                        ┌──────────────────────┐                     │
│                        │    INTEGRATION        │                     │
│                        │  PROCESSING UNIT      │                     │
│                        └──────────────────────┘                     │
│                                                                     │
│  ┌─30        ┌─30           ┌─30           ┌─30                      │
│ ┌──────────┐┌──────────┐  ┌──────────┐  ┌──────────┐                │
│ │DISTRIBUTED││DISTRIBUTED│ │DISTRIBUTED│ │DISTRIBUTED│               │
│ │PROCESSING ││PROCESSING │ │PROCESSING │ │PROCESSING │               │
│ │  UNIT     ││  UNIT     │ │  UNIT     │ │  UNIT     │               │
│ └──────────┘└──────────┘  └──────────┘  └──────────┘                │
│                                                                     │
│                                              ┌─12                    │
│          ┌─────────────────────────────────────┐                    │
│          │           STORAGE UNIT              │                    │
│          │  ┌─13              ┌─14              │                    │
│          │ ┌───────────┐    ┌───────────┐      │                    │
│          │ │TRAINING DATA│   │ MACHINE   │      │                    │
│          │ │    DB      │    │LEARNING MODEL│   │                    │
│          │ └───────────┘    └───────────┘      │                    │
│          └─────────────────────────────────────┘                    │
└───────────────────────────────────────────────────────────────────┘
```

# FIG. 5

```
                                                                    ⌐30
┌─────────────────────────────────────────────────────────────────────┐
│                    DISTRIBUTED PROCESSING UNIT                        │
│  ┌──────────────────────────────────────────────────────────────┐   │
│  │                                                         ⌐32    │   │
│  │          ERROR BACKWARD PROPAGATION PROCESSING                 │   │
│  │                          UNIT                                  │   │
│  │              ⌐33                       ⌐34                      │   │
│  │  ┌─────────────────────┐  ┌─────────────────────┐             │   │
┌─┴──┴──┤   ERROR GRADIENT    │  │   COMMUNICATION     │             │   │
│ FORWARD │    CALCULATOR       │  │    CONTROLLER       │             │   │
│PROPAGATION└─────────────────────┘  └─────────────────────┘         │   │
│PROCESSING UNIT                                                       │   │
└───────┘                                                             │   │
   ⌐31         ⌐35                       ⌐36                           │   │
         ┌─────────────────────┐  ┌─────────────────────┐             │   │
         │     CANDIDATE       │  │    DETERMINATION    │             │   │
         │  EXTRACTION UNIT     │  │        UNIT          │             │   │
         └─────────────────────┘  └─────────────────────┘             │   │
```

DISTRIBUTED PROCESSING UNIT — 30

ERROR BACKWARD PROPAGATION PROCESSING UNIT — 32

FORWARD PROPAGATION PROCESSING UNIT — 31

ERROR GRADIENT CALCULATOR — 33

COMMUNICATION CONTROLLER — 34

CANDIDATE EXTRACTION UNIT — 35

DETERMINATION UNIT — 36

# FIG. 6

| EPOCH 1 | EPOCH 2 | ··· | EPOCH N |
|---------|---------|-----|---------|

| ITERATION 1 | ITERATION 2 | ITERATION 3 | ··· |
|-------------|-------------|-------------|-----|

ERROR GRADIENT #1

ERROR GRADIENT #2

DIFFERENCE #2

THRESHOLD

SKIP CANDIDATE

DETERMINATION UNIT

36

# FIG. 7

SKIP PERIOD      SKIP START TIME

| accuracy | @epoch | run start | run stop | minute | second | Remarks (VERIFICA-TION PURPOSE) | SKIP_TIME | GRACE_TIME | INIT_SKIP_TIME | INIT_GRACE_TIME | SKIP_TARGET_LAYER |
|---|---|---|---|---|---|---|---|---|---|---|---|
| 0.75910 | 58 | | | | | | 4 | 16 | 0 | 4620 | **24,30,15,21,45,3,54,9,69,27,63,60,18,51,6,84,12,33,48,93** |
| 0.75964 | 59 | | | | | | 8 | 32 | 0 | 4620 | **24,30,15,21,45,3,54,9,69,27,63,60,18,51,6,84,12,33,48,93** |
| 0.75906 | 57 | | | | | | 16 | 64 | 0 | 4620 | 24,30,15,21,45,3,54,9,69,27,63,60,18,51,6,84,12,33,48,93 |
| 0.75976 | 58 | | | ... | | | 32 | 128 | 0 | 4620 | 24,30,15,21,45,3,54,9,69,27,63,60,18,51,6,84,12,33,48,93 |
| 0.75956 | 59 | | | | | | 64 | 256 | 0 | 4620 | 24,30,15,21,45,3,54,9,69,27,63,60,18,51,6,84,12,33,48,93 |
| 0.76070 | 60 | | | | | | 128 | 512 | 0 | 4620 | 24,30,15,21,45,3,54,9,69,27,63,60,18,51,6,84,12,33,48,93 |
| 0.75952 | 61 | | | | | | 256 | 1024 | 0 | 4620 | 24,30,15,21,45,3,54,9,69,27,63,60,18,51,6,84,12,33,48,93 |

PERIOD DURING WHICH SKIP PROCESSING IS NOT EXECUTED

EP 3 995 999 A1

# FIG. 8

SKIP PERIOD      SKIP START TIME

| accuracy | @epoch | | SKIP_TIME | GRACE_TIME | INIT_SKIP_TIME | INIT_GRACE_TIME | SKIP_TARGET_LAYER |
|---|---|---|---|---|---|---|---|
| 0.75752 | 69 | ... | 1 | **1** | 0 | 0 | 24,30,15,21,45,3,54,9,69,27,63,60,18,51,6,84,12,33,48,93,66,57,39,102,111,117,108,36,0,42,99,114 |
| 0.75998 | 61 | ... | 1 | **2** | 0 | 0 | 24,30,15,21,45,3,54,9,69,27,63,60,18,51,6,84,12,33,48,93,66,57,39,102,111,117,108,36,0,42,99,114 |
| 0.76088 | 58 | | 1 | **6** | 0 | 0 | 24,30,15,21,45,3,54,9,69,27,63,60,18,51,6,84,12,33,48,93,66,57,39,102,111,117,108,36,0,42,99,114 |
| 0.75984 | 59 | | 1 | **8** | 0 | 0 | 24,30,15,21,45,3,54,9,69,27,63,60,18,51,6,84,12,33,48,93,66,57,39,102,111,117,108,36,0,42,99,114 |

PERIOD DURING WHICH SKIP PROCESSING
IS NOT EXECUTED

EP 3 995 999 A1

# FIG. 9A

| | | ACCURACY | | | | SKIPPED LAYER |
|---|---|---|---|---|---|---|
| 64 | 200208052844808027054_1.log | gx2570-01 | 0.75 934 | | ... | **24,30,15,21,45,3,54,9,69,27,63,60,18,51,6,84,12,33,48,93,66,57,39,102,111,117,108,36,0,42, 99,114,96,87,105,123,72,81,78,160,75,141** |
| 65 | 200208080102128684748_1.log | gx2570-01 | 0.75 950 | | | 24,30,15,21,45,3,54,9,69,27,63,60,18,51,6,84,12,33,48,93,66,57,39,102,111,117,108,36,0,42,99,114,96,87 ,105,123,72,81,78,160,75,141 |
| 66 | 200208103046717500263_1.log | gx2570-01 | 0.75 966 | | | 24,30,15,21,45,3,54,9,69,27,63,60,18,51,6,84,12,33,48,93,66,57,39,102,111,117,108,36,0,42,99,114,96,87 ,105,123,72,81,78,160,75,141 |
| 67 | 200208130035862322729_1.log | gx2570-01 | 0.75 910 | | | 24,30,15,21,45,3,54,9,69,27,63,60,18,51,6,84,12,33,48,93,66,57,39,102,111,117,108,36,0,42,99,114,96,87 ,105,123,72,81,78,160,75,141 |
| 68 | 200208153256796482783_1.log | gx2570-01 | 0.75 936 | | | 24,30,15,21,45,3,54,9,69,27,63,60,18,51,6,84,12,33,48,93,66,57,39,102,111,117,108,36,0,42,99,114,96,87 ,105,123,72,81,78,160,75,141 |
| 69 | 200208181023469213511_1.log | gx2570-01 | 0.75 934 | | | **24,30,15,21,45,3,54,9,69,27,63,60,18,51,6,84,12,33,48,93,66,57,39,102,111,117,108,36,0,42, 99,114,96,87,105,123,72,81,78,160,75,141,150,156,153,147,129** |
| 70 | 200208205245164686525_1.log | gx2570-01 | 0.76 124 | | | 24,30,15,21,45,3,54,9,69,27,63,60,18,51,6,84,12,33,48,93,66,57,39,102,111,117,108,36,0,42,99,114,96,87 ,105,123,72,81,78,160,75,141,150,156,153,147,129 |
| 71 | 200208232730428220592_1.log | gx2570-01 | 0.76 004 | | | 24,30,15,21,45,3,54,9,69,27,63,60,18,51,6,84,12,33,48,93,66,57,39,102,111,117,108,36,0,42,99,114,96,87 ,105,123,72,81,78,160,75,141,150,156,153,147,129 |
| 72 | 200209020218579345175_1.log | gx2570-01 | 0.75 998 | | | 24,30,15,21,45,3,54,9,69,27,63,60,18,51,6,84,12,33,48,93,66,57,39,102,111,117,108,36,0,42,99,114,96,87 ,105,123,72,81,78,160,75,141,150,156,153,147,129 |

FIG. 9B

EP 3 995 999 A1

| 73 | 200209042926833010309_1.log | gx2570-01 | 0.76036 | ... | 24,30,15,21,45,3,54,9,69,27,63,60,18,51,6,84,12,33,48,93,66,57,39,102,111,117,108,36,0,42,99,114,96,87,105,123,72,81,78,160,75,141,150,156,153,147,129 |
| 74 | 200209070137055940492_1.log | gx2570-01 | 0.75952 | | 24,30,15,21,45,3,54,9,69,27,63,60,18,51,6,84,12,33,48,93,66,57,39,102,111,117,108,36,0,42,99,114,96,87,105,123,72,81,78,160,75,141,150,156,153,147,129 |
| 75 | 200209093352849424295_1.log | gx2570-01 | 0.75808 | | **24,30,15,21,45,3,54,9,69,27,63,60,18,51,6,84,12,33,48,93,66,57,39,102,111,117,108,36,0,42,99,114,96,87,105,123,72,81,78,160,75,141,150,156,153,147,129,138,135** |
| 76 | 200209123627169908975_1.log | gx2570-01 | 0.75936 | | 24,30,15,21,45,3,54,9,69,27,63,60,18,51,6,84,12,33,48,93,66,57,39,102,111,117,108,36,0,42,99,114,96,87,105,123,72,81,78,160,75,141,150,156,153,147,129,138,135 |
| 77 | 200209151342112573530_1.log | gx2570-01 | 0.75932 | | 24,30,15,21,45,3,54,9,69,27,63,60,18,51,6,84,12,33,48,93,66,57,39,102,111,117,108,36,0,42,99,114,96,87,105,123,72,81,78,160,75,141,150,156,153,147,129,138,135 |
| 78 | 200209174324985185147_1.log | gx2570-01 | 0.75974 | | 24,30,15,21,45,3,54,9,69,27,63,60,18,51,6,84,12,33,48,93,66,57,39,102,111,117,108,36,0,42,99,114,96,87,105,123,72,81,78,160,75,141,150,156,153,147,129,138,135 |
| 79 | 200209201536616090508_1.log | gx2570-01 | 0.75982 | | 24,30,15,21,45,3,54,9,69,27,63,60,18,51,6,84,12,33,48,93,66,57,39,102,111,117,108,36,0,42,99,114,96,87,105,123,72,81,78,160,75,141,150,156,153,147,129,138,135 |
| 80 | 200209224511289830052_1.log | gx2570-01 | 0.76182 | | 24,30,15,21,45,3,54,9,69,27,63,60,18,51,6,84,12,33,48,93,66,57,39,102,111,117,108,36,0,42,99,114,96,87,105,123,72,81,78,160,75,141,150,156,153,147,129,138,135 |
| 81 | 200210091254176432000_1.log | gx2570-01 | 0.75926 | | 24,30,15,21,45,3,54,9,69,27,63,60,18,51,6,84,12,33,48,93,66,57,39,102,111,117,108,36,0,42,99,114,96,87,105,123,72,81,78,160,75,141,150,156,153,147,129,138,135 |

# FIG. 10A

| | CONVERGENCE COMPLETION EPOCH | | ALL LAYERS ARE TARGETED |
|---|---|---|---|
| 0.76048 | 62 | ⋯ | AVERAGE NUMBER OF SKIP LAYERS: 20 |
| | | | FRONT TWO LAYERS AND FULLY CONNECTED LAYERS ARE EXCLUDED (NOT SKIPPED) |
| 0.75928 | 60 | ⋯ | AVERAGE NUMBER OF SKIP LAYERS: 20 |

# FIG. 10B

NUMBER OF LAYERS SKIPPED AT A TIME vs NUMBER OF ACHIEVEMENT EPOCHS

# FIG. 11

| No | accuracy | NUMBER OF ACHIEVEMENT EPOCHS | SKIP START ITERATION 1epoch=770iter.) | SPECIFICATION OF LAYERS TO BE SKIPPED | optimizer |
|---|---|---|---|---|---|
| 1 | 0.75946 | 60 | 12320 | [0-15] | sgdwlars |
| 2 | 0.75996 | 59 | 15400 | [0-15] | sgdwlars |
| | | | ... | | |
| 6 | 0.75984 | 60 | 7700,30800 | [0-15][16-51] | sgdwlars |
| 7 | 0.75954 | 59 | 8470,38500 | [0-15][16-51] | sgdwlars |
| 8 | 0.76038 | 59 | 12300,26180,38500 | [0-15][16-30][31-51] | sgdwlars |
| 9 | 0.7591 | 58 | 15400,38500,41580 | [0-15][16-51][52-90] | sgdwlars |
| | | | ... | | |
| 16 | 0.75996 | 57 | 21560,26180,38500,41580,43120 | [0-15][16-33][34-72][73-129][130-156] | sgdwlars |
| 17 | 0.76002 | 56 | 20020,26180,34650,38500,41580 | [0-15][16-33][34-72][73-129][130-156] | sgdwlars |
| 18 | 0.75926 | 56 | 20020,26180,38500,40040,41580 | [0-15][16-33][34-72][73-129][130-156] | sgdwlars |

EP 3 995 999 A1

# FIG. 12

WHEN LEARNING IS STOPPED IN ORDER FROM PRECEDING LAYER

| INIT_GRACE_TIME | SKIP_TARGET_LAYER | ACHIEVEMENT EPOCHS |
|---|---|---|
| 24,28,34,41,43,44 | [0-6][7-15][16-33][34-72][73-129][130-156] | 45 |
| 24,28,37,41,43,44 | [0-6][7-15][16-33][34-72][73-129][130-156] | 45 |
| 27,32,34,39,41,43 | [0-6][7-15][16-33][34-72][73-129][130-156] | 45 |
| 27,32,34,39,41,44 | [0-6][7-15][16-33][34-72][73-129][130-156] | 45 |
| 27,32,34,39,42,43 | [0-6][7-15][16-33][34-72][73-129][130-156] | 45 |
| 27,32,34,41,42,43 | [0-6][7-15][16-33][34-72][73-129][130-156] | 45 |

WHEN LEARNING IS NOT STOPPED IN ORDER FROM PRECEDING LAYER, AND LAYERS WHERE LEARNING IS TO BE STOPPED ARE EXCHANGED IN MIDDLE OF ORDER

| INIT_GRACE_TIME | SKIP_TARGET_LAYER | ACHIEVEMENT EPOCHS |
|---|---|---|
| 27,32,37,35,42,41 | [0-6][7-15][16-33][34-72][73-129][130-156] | 54 |
| 37,32,37,35,42,42 | [0-6][7-15][16-33][34-72][73-129][130-156] | 54 |
| 24,28,37,35,43,41 | [0-6][7-15][16-33][34-72][73-129][130-156] | 54 |
| 24,28,37,35,43,43 | [0-6][7-15][16-33][34-72][73-129][130-156] | 54 |
| 27,32,37,35,41,41 | [0-6][7-15][16-33][34-72][73-129][130-156] | 53 |
| 27,32,37,39,43,41 | [0-6][7-15][16-33][34-72][73-129][130-156] | 51 |

# FIG. 13

24

MACHINE LEARNING MODEL

INPUT LAYER

OUTPUT LAYER

FULLY CONNECTED LAYER

BLOCK 1 | BLOCK 2 | BLOCK 3 | ... | BLOCK n

NOTIFICATION OF SKIP CANDIDATE

DETERMINATION PROCEDURE 1: IS REPORTED LAYER LAST LAYER OF EACH BLOCK?
DETERMINATION PROCEDURE 2: IS WARM-UP COMPLETED?
DETERMINATION PROCEDURE 3: HAS PRECEDING BLOCK BEEN SKIPPED?
DETERMINATION PROCEDURE 4: HAVE PREDETERMINED NUMBER OF ITERATIONS BEEN EXECUTED SINCE SKIPPING OF PRECEDING BLOCK?

CONTROL OF WHETHER TO EXECUTE SKIPPING

# FIG. 14

# FIG. 15

```
        ┌──────────────┐
        │    START     │
        └──────────────┘
                │
                ▼
          ╱─────────────╲    S101
   NO ◄──╱  IS MACHINE   ╲
         ╲ LEARNING STARTED? ╱
          ╲─────────────╱
                │ YES
                ▼            S102
        ┌──────────────────────┐
        │  READ IN TRAINING DATA │
        └──────────────────────┘
                │
                ▼            S103
        ┌──────────────────────┐
        │ EXECUTE FORWARD PROPAGATION │
        │       PROCESSING       │
        └──────────────────────┘
                │
                ▼            S104
        ┌──────────────────────┐
        │ CALCULATE ERROR GRADIENT FOR │
        │ LAYER EXCLUDING SKIP TARGET │
        └──────────────────────┘
                │
                ▼            S105
        ┌──────────────────────┐
        │ SELECT ONE LAYER AT END OF │
        │       EACH BLOCK       │
        └──────────────────────┘
                │
                ▼
          ╱─────────────╲    S106
         ╱ ARE REQUIREMENTS OF SKIP ╲  NO
         ╲ CANDIDATE SATIDFIED?     ╱─────►
          ╲─────────────╱
                │ YES
                ▼            S107
          ╱─────────────╲
         ╱ IS SKIP CONDITION SATISFIED? ╲  NO
         ╲                             ╱─────►
          ╲─────────────╱
                │ YES        S108                              S109
        ┌──────────────────────┐        ┌──────────────────────┐
        │ DETERMINE AND REPORT  │        │ DETERMINE CURRENT BLOCK AS │
        │ CURRENT BLOCK AS SKIP TARGET │  │    NON-SKIP TARGET     │
        └──────────────────────┘        └──────────────────────┘
                │
                ▼            S110
          ╱─────────────╲
   YES ◄─╱ IS THERE UNPROCESSED BLOCK? ╲
         ╲─────────────╱
                │ NO
                ▼            S111
          ╱─────────────╲
   NO ◄──╱ IS MACHINE LEARNING ╲
         ╲   TO BE ENDED?      ╱
          ╲─────────────╱
                │ YES
                ▼
        ┌──────────────┐
        │     END      │
        └──────────────┘
```

# FIG. 16

| | STANDARD MODEL | HP ADJUSTMENT | HP ADJUSTMENT + LEARNING SKIPPING |
|---|---|---|---|
| REACH EPOCHS | 59 | 36 | 36 |
| DECREASE EPOCHS | 0 | 0 | 5.29 |
| SUBSTANTIAL EPOCHS | 59 | 36 | 30.71 |
| EXECUTION TIME CONVERSION | 115.2[min] | 72.4[min] | **61.6[min]** |

# FIG. 17

ELEMENT SIZE

(CASE of Resnet-50)

LAYER(Convolution+BatchNormalization)

BLOCK 1　　BLOCK 2　　BLOCK 3　　BLOCK 4

FULLY CONNECTED LAYER

## FIG. 18

| INPUT LAYER | CONVOLUTION LAYER | BATCHNORMA-LIZATION LAYER | CONVOLUTION LAYER | BATCHNORMA-LIZATION LAYER | CONVOLUTION LAYER | BATCHNORMA-LIZATION LAYER | · · · | FULLY CONNECTED LAYER | OUTPUT LAYER |

PAIR

NON-TARGET OF ONE BLOCK

TARGET OF ONE BLOCK

EP 3 995 999 A1

# FIG. 19

# FIG. 20

Europäisches
Patentamt

European
Patent Office

Office européen
des brevets

# EUROPEAN SEARCH REPORT

Application Number

EP 21 18 5707

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIYAUCHI YUKI ET AL: "Layer Skip Learning using LARS variables for 39% Faster Conversion Time and Lower Bandwidth", 2018 25TH IEEE INTERNATIONAL CONFERENCE ON ELECTRONICS, CIRCUITS AND SYSTEMS (ICECS), IEEE, 9 December 2018 (2018-12-09), pages 673-676, XP033504192, DOI: 10.1109/ICECS.2018.8618034 [retrieved on 2019-01-17] * section III * | 1-10 | INV. G06N3/04 G06N3/08 |
| X | XIAO XUELI ET AL: "Fast Deep Learning Training through Intelligently Freezing Layers", 2019 INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 14 July 2019 (2019-07-14), pages 1225-1232, XP033637632, DOI: 10.1109/ITHINGS/GREENCOM/CPSCOM/SMARTDATA. 2019.00205 [retrieved on 2019-10-17] * section III * | 1-10 | |

-----

-/--

TECHNICAL FIELDS
SEARCHED (IPC)

G06N

The present search report has been drawn up for all claims

| Place of search | Date of completion of the search | Examiner |
|---|---|---|
| Munich | 1 February 2022 | Montoneri, Fabio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

| | Europäisches Patentamt<br>European Patent Office<br>Office européen des brevets | EUROPEAN SEARCH REPORT | Application Number<br>EP 21 18 5707 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHIN DONGYEOB ET AL: "Prediction Confidence based Low Complexity Gradient Computation for Accelerating DNN Training",<br>2020 57TH ACM/IEEE DESIGN AUTOMATION CONFERENCE (DAC), IEEE,<br>20 July 2020 (2020-07-20), pages 1-6,<br>XP033838150,<br>DOI: 10.1109/DAC18072.2020.9218650<br>[retrieved on 2020-10-08]<br>* sections 2.2, 3.1, 3.2 *<br>----- | 1-10 | |
| A | KAMAL KC ET AL: "Transfer Learning for Fine-Grained Crop Disease Classification Based on Leaf Images",<br>2019 10TH WORKSHOP ON HYPERSPECTRAL IMAGING AND SIGNAL PROCESSING: EVOLUTION IN REMOTE SENSING (WHISPERS), IEEE,<br>24 September 2019 (2019-09-24), pages 1-5,<br>XP033646825,<br>DOI: 10.1109/WHISPERS.2019.8921213<br>[retrieved on 2019-12-03]<br>* section 2.2; figure 1 *<br>----- | 1-10 | TECHNICAL FIELDS SEARCHED (IPC) |

The present search report has been drawn up for all claims

| Place of search | Date of completion of the search | Examiner |
|---|---|---|
| Munich | 1 February 2022 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 995 999 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4232562 A
- WO 2019167665 A
- US 9047566 B
- US 5243688 A